# EUROPEAN PATENT APPLICATION

(11) **EP 4 475 032 A1**
(43) Date of publication of application: **11.12.2024**
(21) Application number: 23215495.5
(22) Date of filing: 11.12.2023
(51) Int. Cl.: G06F 30/34, G06F 30/392, G06F 30/398

(54) **AUTOMATIC PROCEDURAL CELL LEVEL LAYOUT VERIFICATION OF CUSTOM PARAMETERIZED CELL LIBRARY CELLS IN AN ELECTRONIC DESIGN AUTOMATION SOFTWARE PROGRAM**

(30) Priority: 09.06.2023 US 202318331958
(71) Applicant: INTEL Corporation, Santa Clara, CA 95054 (US)
(72) Inventor: SCHWIEGERSHAUSEN, Markus, 85579 Neubiberg (DE); DOMANSKI, Krzysztof, 85579 Neubiberg (DE)
(74) Representative: Viering, Jentschura & Partner mbB Patent- und Rechtsanwälte

(57) **Abstract**

A method to manufacture an integrated semiconductor device is provided, the method including: select a plurality of integrated circuit semiconductor device component layouts of an entity of integrated circuit semiconductor device component layouts based on a shared set of parameters; perform at least one compatibility verification process for the selected plurality of integrated circuit semiconductor device component layouts with regard to an environment of the integrated circuit semiconductor device component at a predetermined position in an integrated circuit semiconductor device; and output a compatibility verification information indicating a result of the at least one compatibility verification process for the plurality of integrated circuit semiconductor device component layouts.

## Description

### Technical Field

This disclosure generally relates to the field of procedural method for automatic schematic and layout verifications of parameterized cells using an electronic design automation software design framework.

### Background

Automated design of analog integrated circuits (IC) use parameterized cells (PCell). A PCell represents a part or a component of the analog integrated circuit whose structure is dependent on one or more parameters. Hence, a PCell is automatically generated by electronic design automation (EDA) software, e.g. CADENCE of Cadence Design Systems Corp., based on the values of these parameters. Currently, only manual approaches are known for generating PCell variants. However, this requires high effort of manual schematic and layout view generations.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects of the invention are described with reference to the following drawings, in which:
- FIG. 1A to FIG. 1B: show diagrams illustrating semiconductor integrated circuit device;
- FIG. 2: illustrates a flow diagram for manufacturing a semiconductor integrated circuit device component;
- FIGS.3A to 3D: show diagrams illustrating characteristics of a device component layout; and
- FIG. 4: shows a flow diagram for manufacturing a semiconductor integrated circuit device component.

### Description

The following detailed description refers to the accompanying drawings that show, by way of illustration, specific details and aspects in which the invention may be practiced.

The term "as an example" is used herein to mean "serving as an example, instance, or illustration". Any aspect or design described herein as "as an example" is not necessarily to be construed as preferred or advantageous over other aspects or designs.

Layout design of an integrated circuit is an essential link in the production of the integrated circuit. Layout design is related to a correct function of the integrated circuit, the performance, cost and power consumption of the integrated circuit. Various aspects disclosed herein provide techniques for automatically generating layouts for analog integrated circuits. An integrated circuit is typically constructed using cells, where a cell can contain some or all of a circuit or a component. An analog cell is a cell in which some or all of the cell includes an analog circuit or analog component. An analog cell is also known as a parameterized cell (PCell) in which one or more parameters of the analog cell are definable (e.g., parameter values can vary). In various aspects of this disclosure, some or all of a non-final layout for an integrated circuit is constructed with analog cells. A parameter may include a resistance value of a resistor, or width and length of the channel of a transistor, which may be included in a PCell, for example.

In a comparative example, a layout design process of integrated circuits usually includes: a designer generating a layout of corresponding devices in integrated circuit EDA software according to a circuit schematic diagram; carrying out manual layout and wiring according to the connection relationship of different devices in the circuit schematic diagram; performing physical verification (PV) on the initially generated layout, and returning to the steps of manual layout and wiring if the PV fails. A post-simulation verification can use spice simulators and/or parasitic parameter extraction tools, to obtain a final layout. The PV and post-simulation verification can be carried out according to a foundry's process design kit (PDK) and process design constraints. Common design rules of chip foundries include for example minimum distance constraints, metal width constraints, etc. Therefore, layout engineers need to spend a lot of time practicing, through non-stop PV, post-simulation verification, and adjusting and wiring of the layout, in order to perform the necessary checks, e.g. any of design rule checking (DRC), Schematic vs. Schematic (SVS), Layout vs. Schematic (LVS), Layout vs. Layout (LVL). This layout design process is very time-consuming and inefficient. In addition, when the process adjustment or circuit design parameters change greatly, the original layout will no longer be applicable, and it is necessary to re-layout and route, etc., so that the entire design process reusability is low.

A circuit schematic diagram may refer to a circuit diagram used to represent the structure and working principle of the circuit. The EDA software may generate the circuit schematic diagram. A corresponding device component symbol in the EDA software may represent each device component in the circuit schematic diagram. The device component symbol indicates that each device component may have corresponding component information. Device component information may include any of an identification and parameter information of the device component. The device components may include electronic components used to design or form circuits, or components composed of two or more electronic components (also denoted as sub-components). For example, a device component may include any of one or more resistors (e.g. ohmic resistors, photoresistors, thermistors, piezo resistors, humiditysensitive resistors, variable resistors), inductors, capacitors (e.g. fixed capacitors, variable capacitors, semi-variable capacitors), diodes (e.g. diodes, light-emitting diodes, Zener diodes, photodiodes), transistors (for example, N-type transistors, P-type transistors), switches and connectors (e.g. pin headers, row seats, terminal blocks ), etc.

The circuit schematic diagram may include a plurality of device components. The plurality of device components may include a plurality of different device components. Parameter information may include process parameter information and electrical parameter information. The plurality of device components corresponding to the same device component share the same parameter information. The layout designer can determine the process parameter information according to actual needs. For example, the process parameter information of the plurality of device components can be the name of a semiconductor manufacturing company (SMC) and the provided technology of the foundry, e.g. SMC 28nm.

Various aspects disclosed herein may automatically generate or provide a plurality of any of schematic variants and layout variants, e.g. in the CADENCE OA database, based on a set of PCell parameters. These PCell variants can then be used software-based to automatically run any of typical schematic verification steps and layout verification steps, e.g. Schematic vs. Schematic (SVS), Layout vs. Schematic (LVS), Layout vs. Layout (LVL), etc. verification steps. This method is not prone to errors and does not require a time-consuming manual creation of PCell variants. Thus, for example, a plurality of electrostatic discharge (ESD) cell variants for design needs may be provided in an improved manner. This way, the design process for ICs may be improved, e.g. optimized and speed up. Various aspects of this disclosure may be used for design packages used by a foundry service for release to external customers, for example.

Based on this, various aspects of this disclosure provide a layout generation method and a computing device for an integrated circuit, which can enable layout designers to focus more on the overall layout and various physical effects without spending a lot of time on manual layout and wiring, DRC, LVS, SVS, or LVL. In terms of improvement, it solves the problems of long time-consuming layout design and low design reuse rate.

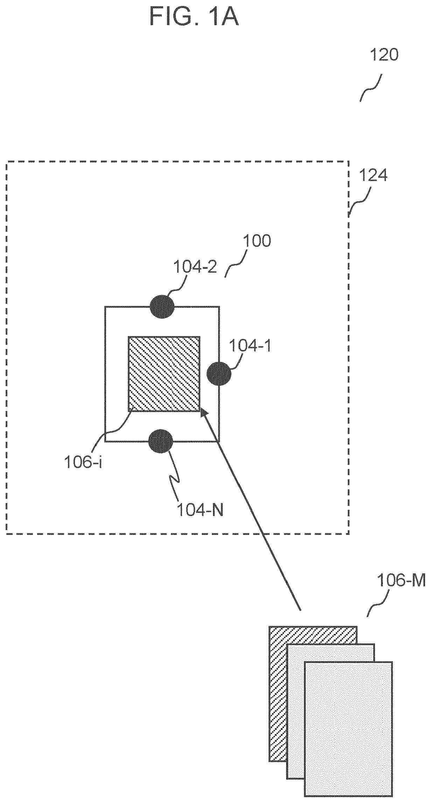

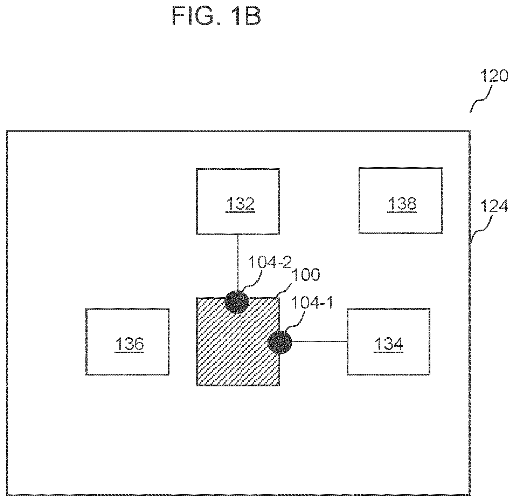

**FIG. 1A** shows a diagram illustrating a semiconductor integrated circuit device 120 having at least one semiconductor integrated circuit device component 100 (also denoted as device component). Illustratively, the semiconductor integrated circuit device component 100 includes a functional device component 106 arranged at a certain predefined position of the semiconductor integrated circuit device 120. The predefined position may correspond to a PCell 100 in an EDA, for example. A macro in the EDA software may implement the functional device component 106. One or more device component interfaces 104-1, 104-2, 104-N (N being an integer) coupled to the functional device component 106 may connect the semiconductor integrated circuit device component 100 to one or more further semiconductor integrated circuit device components 132, 134, 136, 138 of the semiconductor integrated circuit device 120 as illustrated in **FIG. 1B**.

A parameter set may define one device of a semiconductor integrated circuit device component 100 of an entity of semiconductor integrated circuit device layouts. There may be a plurality of layouts of semiconductor integrated circuit devices or sub components thereof corresponding to the same set of parameters. The integrated circuit device component layouts may differ in at least one characteristic from one another. One of the characteristics may be, among others, an ID or denotation of the interface in an EDA, ESD characteristics, or characteristics of the functional device component 106. Illustratively, the set of parameters may include a first subset of parameters corresponding to the functional device component 106 and a second subset of parameters corresponding to further characteristics, e.g. ESD characteristics, number and position of interfaces, etc. Thus, there may be a plurality of layouts for the functional device components 106-1, 104-2, ..., 106-i, ..., 106-M (i and M being an integer) corresponding to the first subset of parameters wherein each of the layouts of the functional device components 106-1, 104-6, ... , 106-i, ..., 106-M corresponds to a different one of the second subset of parameters. Alternatively, or in addition, the plurality of layouts for the functional device components 106-1, 104-6, ..., 106-i, ... , 106-M corresponding to the first subset of parameters may be usable design alternatives, e.g. with regard to a compatibility verification. Alternatively, or in addition, the semiconductor integrated circuit device component 100 may include a plurality of sub-components corresponding to a set of parameters, or each sub-component may correspond to a subset of the set of parameters. Note that the subset of parameters may have common or shared parameters of the set of parameters. Illustratively, a parameter of the set of parameters may be part of a first subset and of a second subset.

Illustratively, the EDA software program may be able to provide one or more for layouts of device components corresponding to the same set of parameters for the semiconductor integrated circuit device component 100 that have passed one or more compatibility verifications. The layouts may correspond to various characteristics of the semiconductor integrated circuit device component 100, e.g. any of a relative position in the PCell, used layers, capacitance, lateral distance, latency, etc. of structures forming the semiconductor integrated circuit device component 100. The layouts of sub-components may be correlated to each other, e.g. a selection of a first sub-component of a first plurality of sub-components may lead to a subset of a second plurality of second sub-com ponents.

A library of a computing device may provide the entity of semiconductor integrated circuit device layouts. The library may be preset. The library may include a plurality of different layouts for the same device component type. For each device component or its sub-component, the library can be queried according to the parameter information of the device component or its sub-components, respectively. If there is one or more layouts for a device component or its sub-component in the library that satisfies the information of the set of parameters, the potentially suitable layouts are tested or verified against one or more compatibility verifications. This way, regarding the layouts that passed the one or more compatibility verifications, the EDA can output one or more suitable layouts as the device (sub-)component layout. A layout designing means, e.g. a layout designer or a computing means, may select any of the suitable device component layouts or combinations of sub-component layouts that has passed the one or more compatibility verification to design the semiconductor integrated circuit device 120.

The semiconductor integrated circuit device 120 may further include a packaging 124. The packaging 124 may be considered in the compatibility verification.

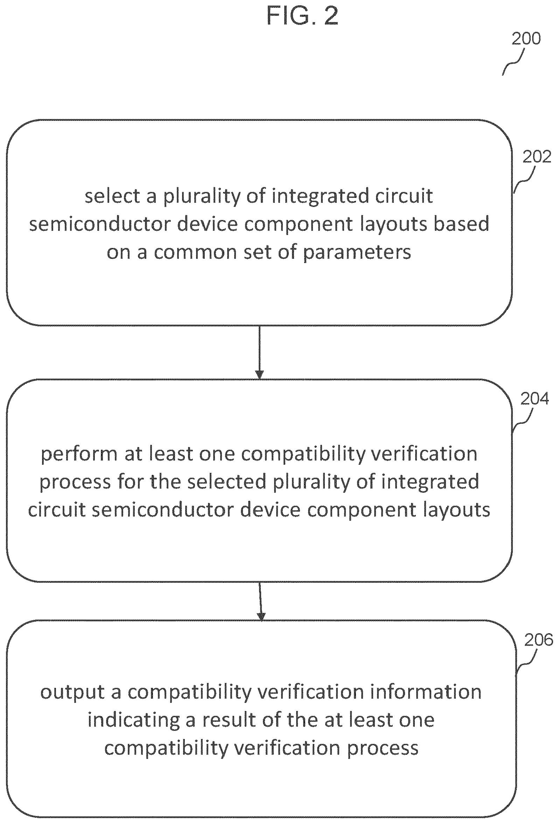

**FIG. 2** illustrates a flow diagram for manufacturing a semiconductor integrated circuit device component. The method can be used to generate a layout of an integrated circuit corresponding to a schematic circuit diagram. The method can be executed by a computing device, e.g. executed through EDA software installed on the computing device. Although FIG. 2 is described in conjunction with an integrated circuit, the process can be used for analog cells in other aspects of this disclosure. Initially, a device specification for an integrated circuit is received. The device component specification defines one or more of the parameters of the integrated circuit device component. Example parameters include, but are not limited to, cell type(s), minimum widths for various components (e.g., wells, transistors), minimum spacing rules, gate lengths, cell heights, number of fins (nfin), number of fingers (e.g., number of transistors), and other geometric constraints.

FIG. 2 is a schematic flowchart of a method for generating an integrated circuit layout. The method can be used to generate a layout of an integrated circuit corresponding to a schematic circuit diagram. The method can be executed by an electronic device, e.g. executed through EDA software installed on the electronic device.

Illustratively, the method 200 may include selecting, in 202, a plurality of integrated circuit semiconductor device component layouts of an entity of integrated circuit semiconductor device component layouts based on a shared set of parameters; performing, in 204, at least one compatibility verification process for the selected plurality of integrated circuit semiconductor device component layouts with regard to an environment of the integrated circuit semiconductor device component at a predetermined position in an integrated circuit semiconductor device; and outputting, in 206, a compatibility verification information indicating a result of the at least one compatibility verification process for the plurality of integrated circuit semiconductor device component layouts.

The shared set of parameters may be a set of parameters for a programmable cell of an electronic design automation program.

The selected plurality of integrated circuit semiconductor device component layouts may be a first subset of the entity of integrated circuit semiconductor device component layouts. The entity of integrated circuit semiconductor device component layouts may further include at least a second subset of integrated circuit semiconductor device component layouts not corresponding to the shared set of parameters.

The plurality of integrated circuit semiconductor device component layouts may correspond to the same type of integrated circuit semiconductor device component.

The integrated circuit semiconductor device component layout may be any of a schematic view and a layout view of the integrated circuit semiconductor device component. The predetermined position may correspond to a programmable cell in an electronic design automation program.

The method 200 may further include receiving an input to select one integrated circuit semiconductor device component layout of the plurality of integrated circuit semiconductor device component layouts that passed the verification. The input may be an input in an electronic design automation program. An input to select one device interface component layout of the plurality of device interface component layouts, e.g. in case there is more than one suitable interface layout. The selection input may be an input in an electronic design automation program.

The integrated circuit semiconductor device component layout corresponds to any of the characteristics of the integrated circuit semiconductor device including any one of the size and shape of an estate of sub-components of the integrated circuit semiconductor device component, the number and position of electrical contacts of the integrated circuit semiconductor device component, the characteristics and position of functional portions of the integrated circuit semiconductor device component, and the like.

The plurality of integrated circuit semiconductor device component layouts may correspond to a common sub-component of an integrated circuit semiconductor device component, and the integrated circuit semiconductor device component may include a plurality of sub-components. The method 200 may further include selecting a plurality of integrated circuit semiconductor device component layouts for each of the plurality of sub-components, perform at least one compatibility verification process for each of the of the plurality of sub-components, and outputting compatibility verification information for each of the plurality of sub-components. The sub-components may include any of the number, position, structure and shape of the electrical contacts of the integrated circuit semiconductor device component, structural characteristics corresponding to electrical characteristics of a functional portion of the integrated circuit semiconductor device component.

The environment in the integrated circuit semiconductor device may include any of at least one further device component and a safety rule of the integrated circuit semiconductor device. The environment in the integrated circuit semiconductor device may include any one of at least one further device component and a (safety) rule of the integrated circuit semiconductor device. The rule for the interfaces may be any of an ESD rule, a minimum size or a minimum distance, and a capacitive load. The selection of the layout from the plurality of layouts may be performed based on a best fitting device interface component layout at the predetermined position.

The output may correspond to any of instructions to form the device component. The selection may be performed based on a best fitting integrated circuit semiconductor device component layout at the predetermined position. A best fitting may be any one of a slightest deviation of the selected layout regarding the set of parameters, a least estate space, a lowest bill of material, a highest yield, etc.. The output may correspond to any of instructions to form the device component.

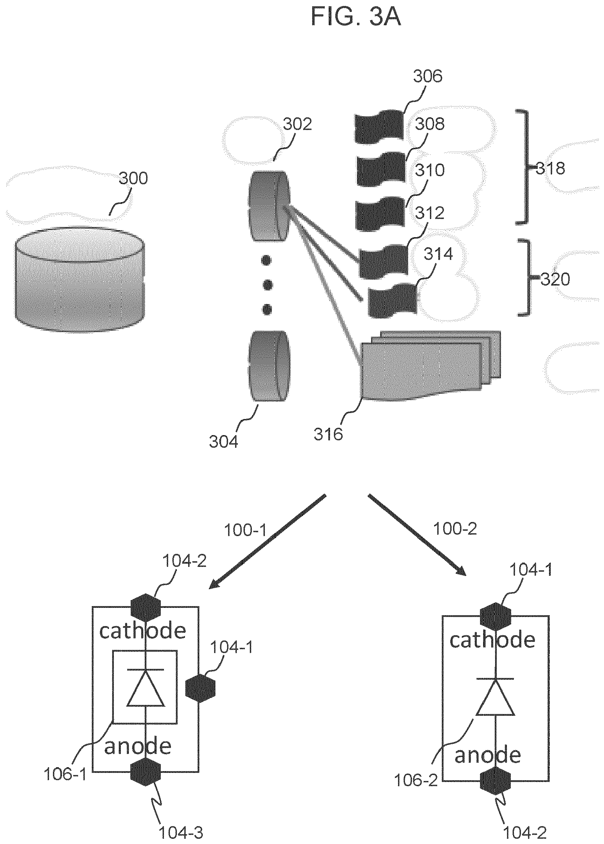

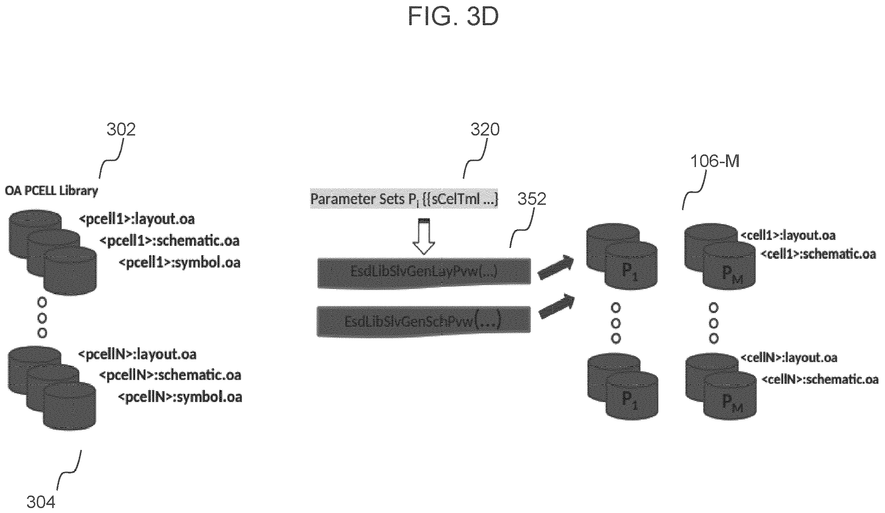

For ease of understanding, the method provided in the present application will be described with reference to an EDA illustrated in FIG. 3A to FIG. 4.

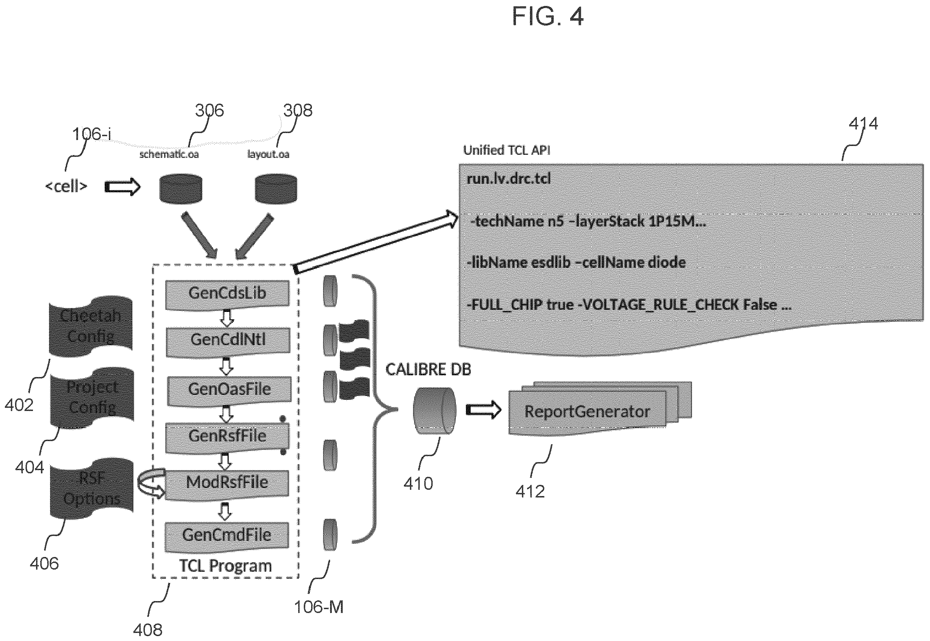

**FIG. 3A** to **FIG. 3D** show diagrams illustrating characteristics of a device component layout, and **FIG. 4** shows a flow diagram for manufacturing a semiconductor integrated circuit device component.

FIG. 3A schematically illustrates an automatic procedure for an L1-QA PCell generation for customized behavior of the PCells, e.g. including customized metallization, variable perimeter, variable diode fingers, etc., allowing a large design space with a multitude of variants for PCells.

A library 300 includes an entity of layouts of device components, e.g. for ESD PCells. The entity includes subsets 302, 304 of types of cell types. Each cell type includes any one of cell views 318, stop views 320, and a device component description format (CDF) 316. The cell view 318 may include any one of a schematic view 306, a symbol view 308, and a layout view 310. The stop view 320 may include any one of an auCdl view 312, and a spectre view 314. This may result in a selected plurality of layout variants (also denoted as layouts) 100-1, 100-2 per basic PCell from the entity of layouts stored in the library 300, e.g. about 10 to about 100 variants per PCell, e.g. about 20 to about 50 variants. Note that FIG. 3A illustrates a diode as a functional device component 106-1, 106-2 for illustration purpose only. Each of the layout variants may be different or distinguishable from the other selected layout variants. However, each of the selected layouts corresponds to the same set of parameters.

For example, the EDA in an initial process selects a plurality of schematic views 306 and layout views 308 for each set of CDF parameters 316 of an available PCell 302, 304. Here, the PCell may refer to one type of device component having the PCell estate in the EDA.

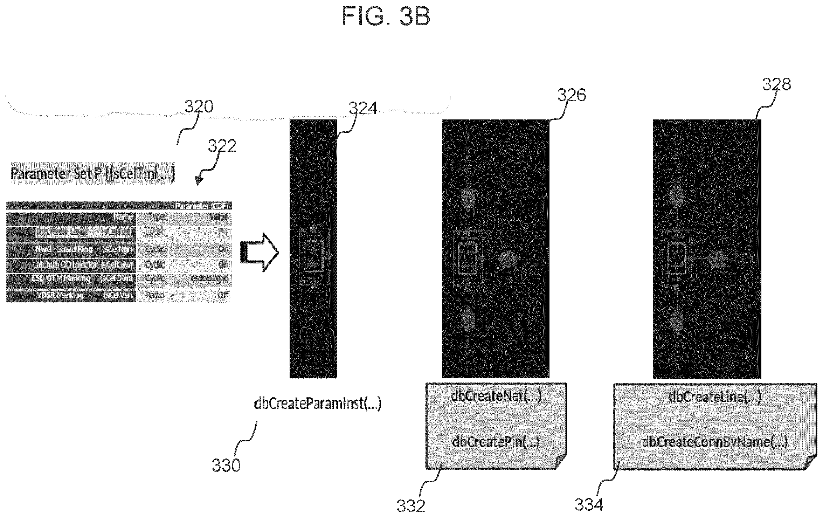

**FIG. 3B** illustrates an example parameter set 320 for the example illustrated in FIG. 3A having adjustable values and types for various parameters 322, e.g. M7 for cyclic top metal layer. The EDA use this parameter set 320 for a single L1-QA test design for each library cell for outputting plurality of cell views 324, 326, 328. As an example, a first layout view 324 may provide one or more functional device components, e.g. a diode type; a second layout view 326 may provide one or more interfaces, e.g. anode, cathode, VDDX; and a third layout view 328 may provide one or more electrical connections between the one or more functional device components and the one or more interfaces. FIG. 3B also illustrates a synthesis 330, 332, 334 corresponding to each of the layout views 324, 326, 328 respectively.

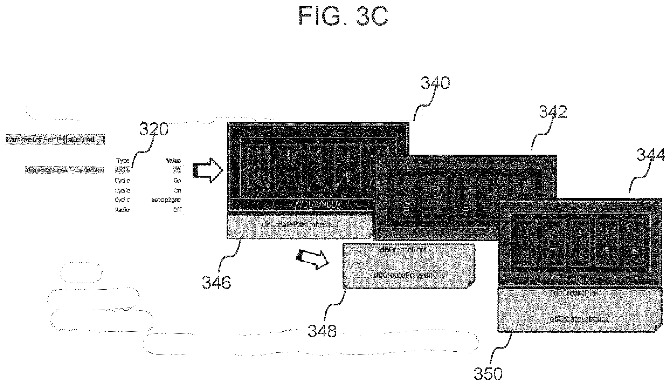

Similarly, as illustrated in FIG. 3C, the EDA can perform the automatic layout view generation using means of procedural (SKILL) programming modules 340, 342, 344. FIG. 3C also illustrates a synthesis 346, 348, 350 corresponding to each of the layout views 340, 342, 344 respectively.

Using this automatic software approach, the EDA can automatically select (e.g. provide or generate) a plurality of PCell layout variants 106-M from an entity of layouts 302 ... 304 stored in a library based on a common (e.g. shared) parameter set 320 using a single prompt 352 in the EDA. This way, a layout designer, e.g. an electronic design engineer or a mask designer, can avoid error-prone and time-consuming manual work. While a realistic to best-case assumption requires approximately 5 minutes for manual generation of schematic and layout views per PCell variant, the procedural software approach allows for automatic generation of e.g. 300 cell variants (30 cells x 10 variants/per cell) within 2 minutes assuming deep submicron technology databases, e.g. an ESD Skill PCell library providing a technology independent Skill Procedural Program Application Programming Interface (API). This way, the EDA using the procedural method for automatic schematic and layout verifications of parameterized cells may reduce required resources in the computing device for providing suitable layouts for device components.

After selecting the plurality of layout variants 106-M potentially suitable for the parameter set 320, the EDA may automatically launch a compatibility verification, e.g. a schematic and layout verification, e.g. DRC, LVS, etc., as illustrated in FIG. 4 using a DRC as an example. The compatibility verification may be a usual DRC compatibility verification 408 including a verification of a computer aided design (CAD) configuration 402, project configuration 404, configuration options 406 in runset. FIG. 4 also illustrates a synthesis 414 corresponding to each of the verification sub-routines. The compatibility verification may be performed for each of the selected layouts 106-M. The EDA may output a compatibility verification information, e.g. in any of a Calibre database 410 or a report 412, indicating a result of the at least one compatibility verification process for the plurality of layouts 106-M.

### EXAMPLES

The examples set forth herein are illustrative and not exhaustive.

Example 1 is a non-transitory computer readable medium having instructions stored therein that when executed by a processor cause the processor to: select a plurality of integrated circuit semiconductor device component layouts of an entity of integrated circuit semiconductor device component layouts based on a shared set of parameters; perform at least one compatibility verification process for the selected plurality of integrated circuit semiconductor device component layouts with regard to an environment of the integrated circuit semiconductor device component at a predetermined position in an integrated circuit semiconductor device; and output a compatibility verification information indicating a result of the at least one compatibility verification process for the plurality of integrated circuit semiconductor device component layouts.

In Example 2, the subject matter of Example 1 can optionally include that the shared set of parameters are a set of parameters for a programmable cell of an electronic design automation program.

In Example 3, the subject matter of Example 1 or 2 can optionally include that the predetermined position corresponds to a programmable cell in an electronic design automation program.

In Example 4, the subject matter of any one of Examples 1 to 3 can optionally include instructions that cause the processor to receive an input to select one integrated circuit semiconductor device component layout of the plurality of integrated circuit semiconductor device component layouts that passed the verification.

In Example 5, the subject matter of any one of Examples 1 to 4 can optionally include that the plurality of integrated circuit semiconductor device component layouts corresponds to the same type of integrated circuit semiconductor device component.

In Example 6, the subject matter of any one of Examples 1 to 5 can optionally include that the selected plurality of integrated circuit semiconductor device component layouts is a first subset of the entity of integrated circuit semiconductor device component layouts, wherein the entity of integrated circuit semiconductor device component layouts further includes at least a second subset of integrated circuit semiconductor device component layouts not corresponding to the shared set of parameters.

In Example 7, the subject matter of any one of Examples 1 to 3 can optionally include that the plurality of integrated circuit semiconductor device component layouts correspond to a common sub-component of an integrated circuit semiconductor device component, and the integrated circuit semiconductor device component includes a plurality of sub-components, wherein the non-transitory computer readable medium further has instructions stored therein that when executed by the processor cause the processor to select a plurality of integrated circuit semiconductor device component layouts for each of the plurality of sub-components, perform at least one compatibility verification process for each of the of the plurality of sub-components, and to output compatibility verification information for each of the plurality of sub-components.

In Example 8, the subject matter of any one of Examples 1 to 7 can optionally include that the sub-components include any of the number, position, structure and shape of the electrical contacts of the integrated circuit semiconductor device component, structural characteristics corresponding to electrical characteristics of a functional portion of the integrated circuit semiconductor device component.

In Example 9, the subject matter of any one of Examples 1 to 8 can optionally include that the integrated circuit semiconductor device component layout is any of a schematic view and a layout view of the integrated circuit semiconductor device component.

In Example 10, the subject matter of any one of Examples 1 to 9 can optionally include that the integrated circuit semiconductor device component layout corresponds to any of the characteristics of the integrated circuit semiconductor device including any of the size and shape of an estate of sub-components of the integrated circuit semiconductor device component, , the number and position of electrical contacts of the integrated circuit semiconductor device component, the characteristics and position of functional portions of the integrated circuit semiconductor device component.

In Example 11, the subject matter of any one of Examples 1 to 10 can optionally include that the environment in the integrated circuit semiconductor device includes any of at least one further device component and a safety rule of the integrated circuit semiconductor device.

In Example 12, the subject matter of any one of Examples 1 to 11 can optionally include that the selection is performed based on a best fitting integrated circuit semiconductor device component layout at the predetermined position.

In Example 13, the subject matter of any one of Examples 1 to 12 can optionally include that the output corresponds to any of instructions to form the device component.

Example 14 is a computing device including a memory storing an entity of integrated circuit semiconductor device component layouts, and a processor configured to: select a plurality of integrated circuit semiconductor device component layouts of an entity of integrated circuit semiconductor device component layouts based on a shared set of parameters, perform at least one compatibility verification process for the selected plurality of integrated circuit semiconductor device component layouts with regard to an environment of the integrated circuit semiconductor device component at a predetermined position in an integrated circuit semiconductor device; and output a compatibility verification information indicating a result of the at least one compatibility verification process for the plurality of integrated circuit semiconductor device component layouts.

In Example 15, the subject matter of Example 14 can optionally include that the shared set of parameters are a set of parameters for a programmable cell of an electronic design automation program.

In Example 16, the subject matter of Example 14 or 15 can optionally include that the predetermined position corresponds to a programmable cell in an electronic design automation program.

In Example 17, the subject matter of any one of Examples 14 to 16 can optionally include that device is further configured to receive an input to select one integrated circuit semiconductor device component layout of the plurality of integrated circuit semiconductor device component layouts that passed the verification.

In Example 18, the subject matter of any one of Examples 14 to 17 can optionally include that the plurality of integrated circuit semiconductor device component layouts corresponds to the same type of integrated circuit semiconductor device component.

In Example 19, the subject matter of any one of Examples 14 to 18 can optionally include that the selected plurality of integrated circuit semiconductor device component layouts is a first subset of the entity of integrated circuit semiconductor device component layouts, wherein the entity of integrated circuit semiconductor device component layouts further includes at least a second subset of integrated circuit semiconductor device component layouts not corresponding to the shared set of parameters.

In Example 20, the subject matter of any one of Examples 14 to 19 can optionally include that the plurality of integrated circuit semiconductor device component layouts correspond to a common sub-component of an integrated circuit semiconductor device component, and the integrated circuit semiconductor device component includes a plurality of sub-components, wherein the non-transitory computer readable medium further has instructions stored therein that when executed by the processor cause the processor to select a plurality of integrated circuit semiconductor device component layouts for each of the plurality of sub-components, perform at least one compatibility verification process for each of the of the plurality of sub-components, and output compatibility verification information for each of the plurality of sub-components.

In Example 21, the subject matter of any one of Examples 14 to 18 can optionally include that the sub-components include any of the number, position, structure and shape of the electrical contacts of the integrated circuit semiconductor device component, structural characteristics corresponding to electrical characteristics of a functional portion of the integrated circuit semiconductor device component.

In Example 22, the subject matter of any one of Examples 14 to 21 can optionally include that the integrated circuit semiconductor device component layout is any of a schematic view and a layout view of the integrated circuit semiconductor device component.

In Example 23, the subject matter of any one of Examples 14 to 22 can optionally include that the integrated circuit semiconductor device component layout corresponds to any of the characteristics of the integrated circuit semiconductor device including any of the size and shape of an estate of sub-components of the integrated circuit semiconductor device component, , the number and position of electrical contacts of the integrated circuit semiconductor device component, the characteristics and position of functional portions of the integrated circuit semiconductor device component.

In Example 24, the subject matter of any one of Examples 14 to 18 can optionally include that the environment in the integrated circuit semiconductor device includes any of at least one further device component and a safety rule of the integrated circuit semiconductor device.

In Example 25, the subject matter of any one of Examples 14 to 24 can optionally include that the selection is performed based on a best fitting integrated circuit semiconductor device component layout at the predetermined position.

In Example 26, the subject matter of any one of Examples 14 to 18 can optionally include that the output corresponds to any of instructions to form the device component.

Example 27 is a means for manufacturing an integrated circuit semiconductor device including a means for storing an entity of integrated circuit semiconductor device component layouts, and a means for selecting a plurality of integrated circuit semiconductor device component layouts from the entity of integrated circuit semiconductor device component layouts based on a shared set of parameters, a means to perform at least one compatibility verification process for the selected plurality of integrated circuit semiconductor device component layouts with regard to an environment of the integrated circuit semiconductor device component at a predetermined position in the integrated circuit semiconductor device; and a means for outputting a compatibility verification information indicating a result of the at least one compatibility verification process for the plurality of integrated circuit semiconductor device component layouts. The means for manufacturing an integrated circuit semiconductor device component may be Design Team using an EDA software on a computing device or a software module of an EDA software for example. The means for performing at least one compatibility verification process may be an outsourced semiconductor assembly and test (OSAT) or a software module of an EDA software for example. The means for outputting a compatibility verification information may be a software module of an EDA software for example. A means for receiving the set of parameters as an input may be a software module of an EDA software for example. A means for receiving an input to select one device interface component may be a software module of an EDA software for example.

In Example 28, the subject matter of Example 27 can optionally include that the shared set of parameters are a set of parameters for a programmable cell of an electronic design automation program.

In Example 29, the subject matter of Example 27 or 28 can optionally include that the predetermined position corresponds to a programmable cell in an electronic design automation program.

In Example 30, the subject matter of any one of Examples 27 to 29 can optionally include that device is further configured to receive an input to select one integrated circuit semiconductor device component layout of the plurality of integrated circuit semiconductor device component layouts that passed the verification.

In Example 31, the subject matter of any one of Examples 27 to 30 can optionally include that the plurality of integrated circuit semiconductor device component layouts corresponds to the same type of integrated circuit semiconductor device component.

In Example 32, the subject matter of any one of Examples 27 to 31 can optionally include that the selected plurality of integrated circuit semiconductor device component layouts is a first subset of the entity of integrated circuit semiconductor device component layouts, wherein the entity of integrated circuit semiconductor device component layouts further includes at least a second subset of integrated circuit semiconductor device component layouts not corresponding to the shared set of parameters.

In Example 33, the subject matter of any one of Examples 27 to 32 can optionally include that the plurality of integrated circuit semiconductor device component layouts correspond to a common sub-component of an integrated circuit semiconductor device component, and the integrated circuit semiconductor device component includes a plurality of sub-components, wherein the non-transitory computer readable medium further has instructions stored therein that when executed by the processor cause the processor to select a plurality of integrated circuit semiconductor device component layouts for each of the plurality of sub-components, perform at least one compatibility verification process for each of the of the plurality of sub-components, and output compatibility verification information for each of the plurality of sub-components.

In Example 34, the subject matter of any one of Examples 27 to 33 can optionally include that the sub-components include any of the number, position, structure and shape of the electrical contacts of the integrated circuit semiconductor device component, structural characteristics corresponding to electrical characteristics of a functional portion of the integrated circuit semiconductor device component.

In Example 35, the subject matter of any one of Examples 27 to 34 can optionally include that the integrated circuit semiconductor device component layout is any of a schematic view and a layout view of the integrated circuit semiconductor device component.

In Example 36, the subject matter of any one of Examples 27 to 35 can optionally include that the integrated circuit semiconductor device component layout corresponds to any of the characteristics of the integrated circuit semiconductor device including any of the size and shape of an estate of sub-components of the integrated circuit semiconductor device component, , the number and position of electrical contacts of the integrated circuit semiconductor device component, the characteristics and position of functional portions of the integrated circuit semiconductor device component.

In Example 37, the subject matter of any one of Examples 27 to 36 can optionally include that the environment in the integrated circuit semiconductor device includes any of at least one further device component and a safety rule of the integrated circuit semiconductor device.

In Example 38, the subject matter of any one of Examples 27 to 37 can optionally include that the selection is performed based on a best fitting integrated circuit semiconductor device component layout at the predetermined position.

In Example 39, the subject matter of any one of Examples 27 to 38 can optionally include that the output corresponds to any of instructions to form the device component.

While the invention has been particularly shown and described with reference to specific aspects, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A non-transitory computer readable medium, comprising instructions stored therein that when executed by a processor cause the processor to:
select a plurality of integrated circuit semiconductor device component layouts of an entity of integrated circuit semiconductor device component layouts based on a shared set of parameters;
perform at least one compatibility verification process for the selected plurality of integrated circuit semiconductor device component layouts with regard to an environment of the integrated circuit semiconductor device component at a predetermined position in an integrated circuit semiconductor device; and
output a compatibility verification information indicating a result of the at least one compatibility verification process for the plurality of integrated circuit semiconductor device component layouts.

2. The non-transitory computer readable medium of claim 1,
wherein the shared set of parameters are a set of parameters for a programmable cell of an electronic design automation program.

3. The non-transitory computer readable medium of claim 1 or claim 2,
wherein the predetermined position corresponds to a programmable cell in an electronic design automation program.

4. The non-transitory computer readable medium of any one of claims 1 to 3, further comprising instruction that cause the processor to receive an input to select one integrated circuit semiconductor device component layout of the plurality of integrated circuit semiconductor device component layouts that passed the verification.

5. The non-transitory computer readable medium of any one of claims 1 to 4,
wherein the plurality of integrated circuit semiconductor device component layouts corresponds to the same type of integrated circuit semiconductor device component.

6. The non-transitory computer readable medium of any one of claims 1 to 5, wherein the selected plurality of integrated circuit semiconductor device component layouts is a first subset of the entity of integrated circuit semiconductor device component layouts, wherein the entity of integrated circuit semiconductor device component layouts further comprises at least a second subset of integrated circuit semiconductor device component layouts not corresponding to the shared set of parameters.

7. The non-transitory computer readable medium of any one of claims 1 to 6,
wherein the integrated circuit semiconductor device component layout is any of a schematic view and a layout view of the integrated circuit semiconductor device component.

8. The non-transitory computer readable medium of any one of claims 1 to 7,
wherein the environment in the integrated circuit semiconductor device comprises any of at least one further device component and a safety rule of the integrated circuit semiconductor device.

9. The non-transitory computer readable medium of any one of claims 1 to 8,
wherein the output corresponds to any of instructions to form the device component.

10. The non-transitory computer readable medium of any one of claims 1 to 9,
wherein the integrated circuit semiconductor device component layout corresponds to any of the characteristics of the integrated circuit semiconductor device including any of the size and shape of an estate of sub-components of the integrated circuit semiconductor device component, the number and position of electrical contacts of the integrated circuit semiconductor device component, the characteristics and position of functional portions of the integrated circuit semiconductor device component.

11. The non-transitory computer readable medium of any one of claims 1 to 10,
wherein the selection is performed based on a best fitting integrated circuit semiconductor device component layout at the predetermined position.

12. The non-transitory computer readable medium of any one of claims 1 to 11,
wherein the plurality of integrated circuit semiconductor device component layouts corresponds to a common sub-component of an integrated circuit semiconductor device component, and the integrated circuit semiconductor device component includes a plurality of sub-components, wherein the non-transitory computer readable medium further has instructions stored therein that when executed by the processor cause the processor to select a plurality of integrated circuit semiconductor device component layouts for each of the plurality of sub-components, perform at least one compatibility verification process for each of the of the plurality of sub-components, and to output compatibility verification information for each of the plurality of sub-components.

13. The non-transitory computer readable medium of claim 12,
wherein the sub-components include any of the number, position, structure and shape of the electrical contacts of the integrated circuit semiconductor device component, structural characteristics corresponding to electrical characteristics of a functional portion of the integrated circuit semiconductor device component.

14. A method comprising:
selecting a plurality of integrated circuit semiconductor device component layouts of an entity of integrated circuit semiconductor device component layouts based on a shared set of parameters;
performing at least one compatibility verification process for the selected plurality of integrated circuit semiconductor device component layouts with regard to an environment of the integrated circuit semiconductor device component at a predetermined position in an integrated circuit semiconductor device; and
outputting a compatibility verification information indicating a result of the at least one compatibility verification process for the plurality of integrated circuit semiconductor device component layouts.

15. A computing device comprising
a memory configured to store an entity of integrated circuit semiconductor device component layouts, and
a processor configured to:
select a plurality of integrated circuit semiconductor device component layouts of an entity of integrated circuit semiconductor device component layouts based on a shared set of parameters,
perform at least one compatibility verification process for the selected plurality of integrated circuit semiconductor device component layouts with regard to an environment of the integrated circuit semiconductor device component at a predetermined position in an integrated circuit semiconductor device; and
output a compatibility verification information indicating a result of the at least one compatibility verification process for the plurality of integrated circuit semiconductor device component layouts.
